# EUROPEAN PATENT APPLICATION

(11) **EP 3 059 145 A1**
(43) Date of publication of application: **24.08.2016**
(21) Application number: 16154426.7
(22) Date of filing: 05.02.2016
(51) Int. Cl.: B62D 33/037

(54) **LOCKING UNIT FOR A BOARD OF A BODY OF AN INDUSTRIAL VEHICLE**

(30) Priority: 20.02.2015 IT VR20150026
(71) Applicant: Scattolini S.p.A., 37067 Valeggio sul Mincio (Verona) (IT)
(72) Inventor: Scattolo, Michelangelo, 37067 Valeggio sul Mincio (VR) (IT)
(74) Representative: Ponchiroli, Simone

(57) **Abstract**

A locking unit (1) for an openable side board (5) of an industrial vehicle body (7). The locking unit (1) comprises a supporting body (2) fixable to the openable side board (5) or to another part (6) of the body (7), an operating lever (3) rotatably connected to the supporting body (2) on a first axis of rotation (11), a hooking member (4) rotatably connected to the operating lever (3) on a second axis of rotation (14) and comprising a first end portion (15) which is hookable to a fixed contact element (16) which is fixed respectively to the other part (6) of the body (7) or to the openable side board (5). The operating lever (3) is rotatable relative to the supporting body (2) between a locking position and an unlocking position. The hooking member (4) is rotatable relative to the operating lever (3) between a first angular position and a second angular position; in the second angular position, the hooking member (4) and the operating lever (3) are positioned substantially in an L-shape or a T-shape. In use, the openable side board (5) is locked relative to the other part (6) of the body (7) when the operating lever (3) and the hooking member (4) are in the locking position and in the first angular position, whilst the openable side board (5) is unlocked when the operating lever (3) and the hooking member (4) are in the unlocking position and in the second angular position. The locking unit (1) also comprises an engaging element (25) for reversibly retaining the operating lever (3) and the hooking member (4) in the second angular position.

## Description

### DESCRIPTION

This invention relates to a locking unit for openable side boards of industrial vehicle bodies, the locking unit having the function of locking a side board in the closed position.

In particular, this invention relates to a locking unit of the type that comprises a supporting body fixable to the openable side board or to another part of the body, an operating lever which is rotatably connected to the supporting body, and a hooking member which is rotatably connected to the operating lever and is hookable to, and unhookable from, a fixed contact element which is fixed respectively to said other part of the vehicle body or to the openable side board.

According to the prior art, the supporting body, the operating lever and the hooking member form an articulated mechanism that can be operated by a user for locking and unlocking the openable side board.

In use, the openable side board is locked relative to the other part of the body when the operating lever is in a locking position and the hooking member is hooked to the fixed contact element and extends mainly on the opposite side to the operating lever. In this condition, the hooking member applies traction on the fixed contact element towards the supporting body and therefore locks the side board relative to the other part of the vehicle body.

To unlock the openable side board, the user pulls the operating lever, making it rotate towards an unlocking position. Thanks to said articulated mechanism, the hooking member is positioned so that it forms an L-shape or a T-shape relative to the operating lever and is slackened relative to the fixed contact element, allowing unhooking from the latter and freeing the openable side board.

Locking units made according to the prior art technology have several disadvantages.

First, the unlocking and locking of the side board are operations that, usually requiring the use of both hands, may be difficult at least in some cases in which the user has one hand occupied for example holding the side board.

In fact, during unlocking, the user must extract the hooking member from the fixed contact element to completely free the side board. That is to say, he must make the hooking member rotate towards him with a different hand to that which is operating the operating lever.

During locking, insertion of the hooking member in the fixed contact element must be guided with one hand while pushing the operating lever towards the locking position.

Second, during side board unlocking, the locking unit could be damaged or deformed if the user were to force the operating lever to an extreme position in which the operating lever goes up against the hooking member and risks getting jammed with it.

Third, after unlocking the side board, the hooking member and the operating lever could remain free and in a position projecting from the vehicle body, constituting a dangerous obstacle for anyone passing close to the body without being aware of that obstacle.

In this context the technical purpose which forms the basis of this invention is to provide a locking unit for side boards of industrial vehicle bodies which overcomes the above-mentioned disadvantages.

In particular, the technical purpose of this invention is to provide a locking unit for side boards of industrial vehicle bodies which allows the operations of unlocking and locking the openable side board to be made easier, reducing the operating movements performed by a user.

A further technical purpose of this invention is to provide a locking unit for side boards of industrial vehicle bodies that is less subject to accidental damage due to incorrect operating movements performed by a user.

A final technical purpose of this invention is to provide a locking unit for side boards of industrial vehicle bodies that reduces the risk of leaving parts projecting dangerously when the side board is unlocked.

The technical purpose specified and the aims indicated are substantially achieved by a locking unit for side boards of industrial vehicle bodies made as described in the appended claims.

Further features and the advantages of this invention are more apparent in the detailed description, with reference to the accompanying drawings which illustrate a preferred, non-limiting embodiment of a locking unit for side boards of industrial vehicle bodies, in which:
- Figure 1 is a first axonometric view of a locking unit made in accordance with this invention, in a condition of hooking with a fixed contact element;
- Figure 2 is a front view of the locking unit of Figure 1;
- Figure 3 is a second axonometric view of the locking unit of Figure 1;
- Figure 4 is a front view of the locking unit of Figure 1 with some parts removed;
- Figure 5 is an axonometric view of the locking unit of Figure 1 with some parts removed;
- Figure 6 is an axonometric and partly exploded view of the locking unit of Figure 1 with some parts removed;
- Figure 7 is a plan view of the locking unit of Figure 1, in cross-section according to the line VII - VII of Figure 2;
- Figure 8 is a first axonometric view of the locking unit of Figure 1 in cross-section according to the line VII - VII of Figure 2;
- Figure 9 is a second axonometric view of the locking unit of Figure 1 in cross-section according to the line VII - VII of Figure 2;
- Figure 10 is a front view of a portion of an industrial vehicle body to which the locking unit of Figure 1 is applied, which is in the locking position;
- Figure 11 is a perspective bottom view of the portion of body of Figure 10;
- Figure 12 is a plan view of the portion of body of Figure 10, in cross-section according to the line XII - XII, in which the locking unit is in a first unlocking step;
- Figure 13 is a perspective bottom view of the portion of body of Figure 10, in which the locking unit is in a second unlocking step;
- Figure 14 is a perspective side view of the portion of body of Figure 10, in which the locking unit is in a third unlocking step;
- Figure 15 is another perspective side view of the portion of body of Figure 10, in which the locking unit is in the third unlocking step and is shown in cross-section according to the line XII - XII of Figure 10;
- Figure 16 is a plan view of the portion of body of Figure 10, in which the locking unit is in the third unlocking step and is shown in cross-section according to the line XII - XII of Figure 10;
- Figure 17 is a perspective bottom view of the portion of body of Figure 10, in which the locking unit is in a fourth unlocking step;
- Figure 18 is a plan view of the portion of body of Figure 10, in which the locking unit is shown in cross-section according to the line XII - XII of Figure 10 and a component of it is in a releasing position relative to what is shown in Figure 16.

With reference to the accompanying drawings, the numeral 1 denotes in its entirety a locking unit for side boards of industrial vehicle bodies according to this invention.

The locking unit 1 which forms the subject matter of this invention comprises a supporting body 2, an operating lever 3 rotatably connected to the supporting body 2 and a hooking member 4 rotatably connected to the operating lever 3.

In general, the supporting body 2 in use can be fixed to an openable side board 5 whose closing must be guaranteed, or to another part 6 of an industrial vehicle body 7. Said other part 6 may, for example, be a fixed element or another openable side board. Alternatively, the supporting body 2 may be integrated in the openable side board 5 or in the other part 6, or it may even be constituted directly by the openable side board 5 itself or by the other part 6.

In the embodiment illustrated in the accompanying drawings, the supporting body 2 comprises a substantially flat flange 8 with holes in it for fixing to the vehicle body 7 using screws or bolts. Advantageously, said holes are slot-shaped to allow a predetermined adjustment of the position of the locking unit 1 during mounting. The supporting body 2 also comprises two wings 9, 10 (an upper wing 9 and a lower wing 10) which come out perpendicularly to the flange 8 and are on opposite sides of the flange 8. At the wings 9, 10, the supporting body 2 has a C-shaped cross section.

The operating lever 3 pivots at the two wings 9, 10, that is to say, it is rotatably connected to the supporting body 2 on a first axis of rotation 11 which is perpendicular to the wings 9, 10. The operating lever 3 pivots at its first end region 12, through which the first axis of rotation 11 passes and which is contained between the two wings 9, 10. The operating lever 3 also comprises a second end region 13 which, in use, is handle-shaped: the second end region 13 can be gripped and operated by a user to rotate the operating lever 3 during use.

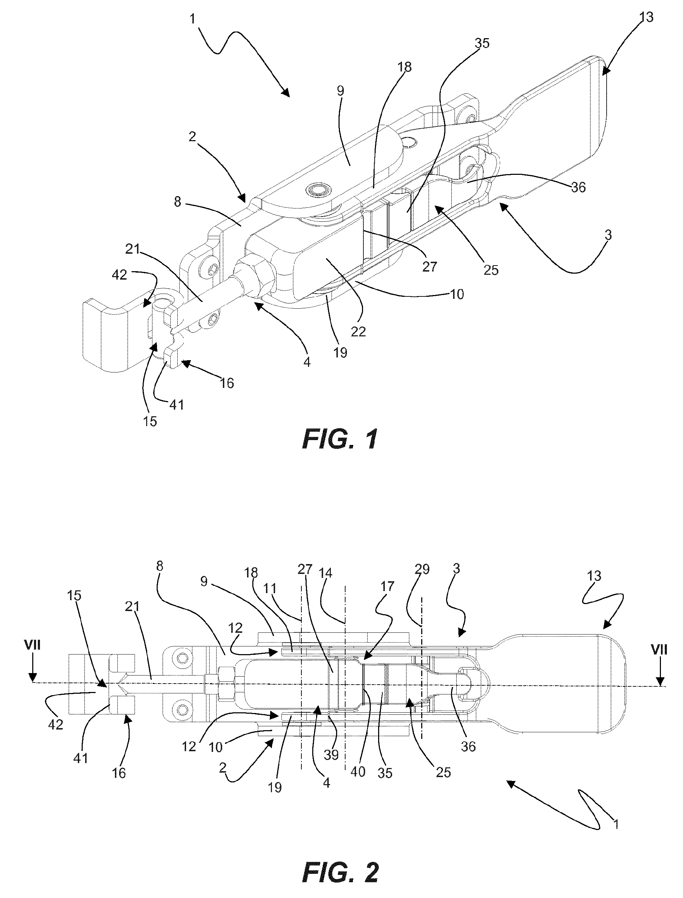

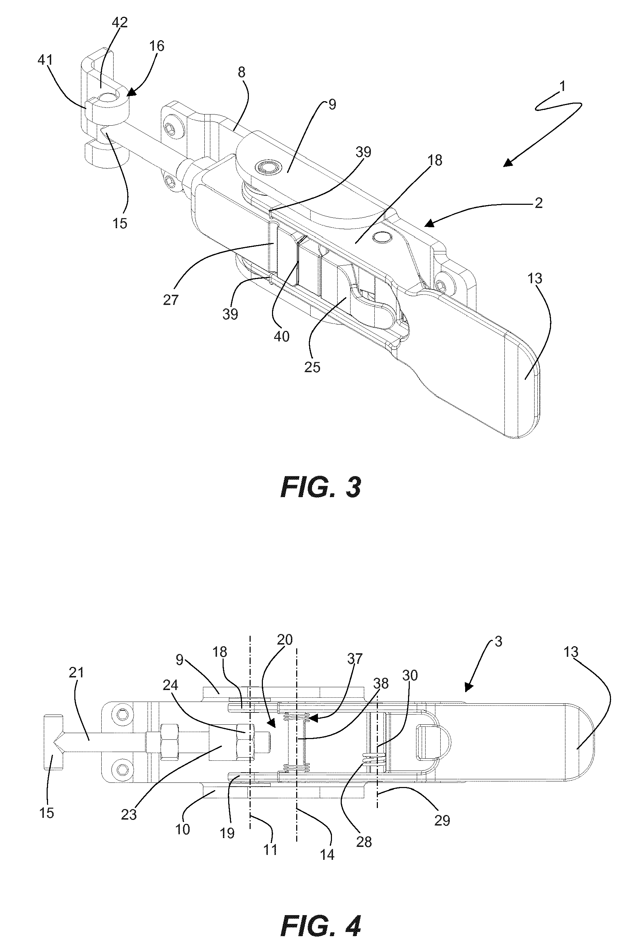

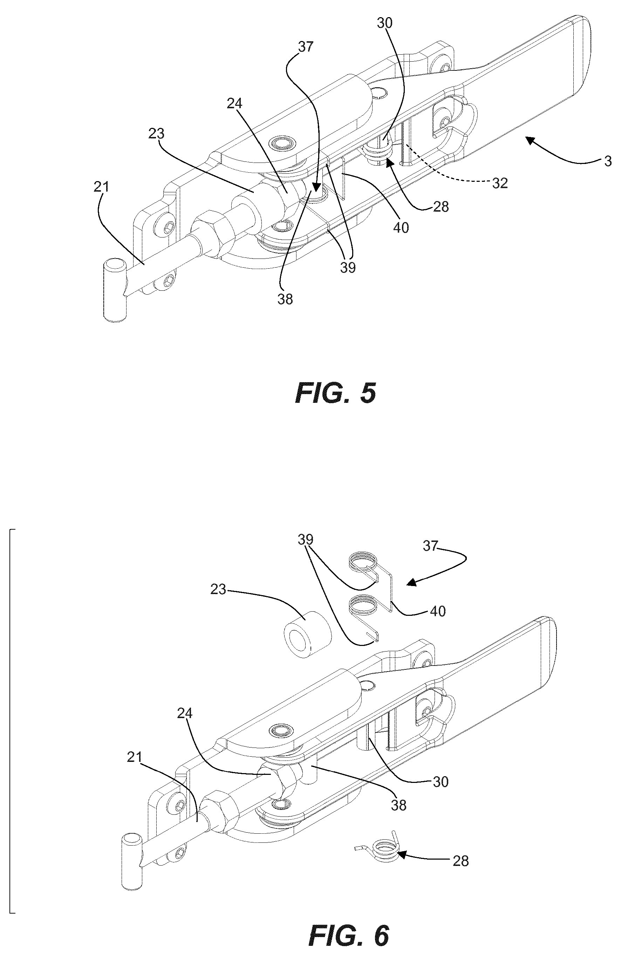

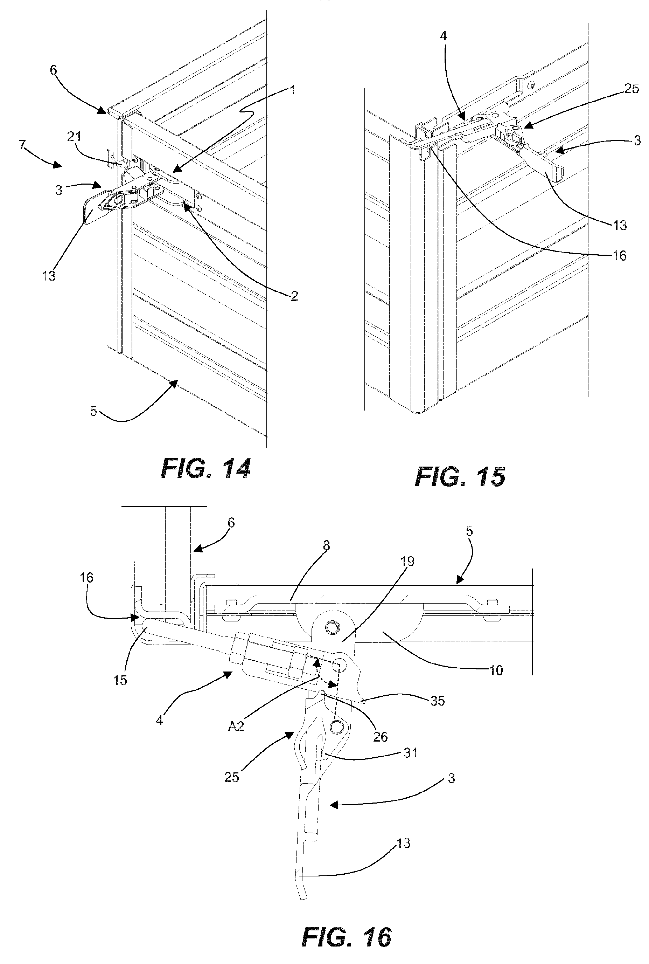

The operating lever 3 is rotatable relative to the supporting body 2 between a first position (shown in Figures 1 to 12), in which the operating lever 3 is substantially parallel with the flange 8 of the supporting body 2 and with the respective side board 5 or other part 6 of the body 7, and a second position (shown in Figures 14 to 18), in which the operating lever 3 forms an angle relative to the flange 8 and comes out from the respective side board 5 or other part 6 of the body 7.

As is indicated in more detail below, the first position in use corresponds to a locking position in which the openable side board 5 is locked relative to the other part 6 of the body 7, whilst the second position in use corresponds to an unlocking position in which the openable side board 5 is unlocked relative to the other part 6 of the body 7.

By acting on the operating lever 3, the user can make the lever 3 rotate between the locking position and the unlocking position, and vice versa, as required.

The hooking member 4 is rotatably connected to the operating lever 3 on a second axis of rotation 14 which, in particular, is parallel with the first axis of rotation 11. The hooking member 4 comprises a first end portion 15 which, in use, is hookable to a fixed contact element 16, respectively fixed to the other part 6 of the body 7 or to the openable side board 5. Specifically, said first end portion 15 is a hook-shaped or T-shaped end piece, intended to be inserted in a corresponding seat of the fixed contact element 16, with which it performs locking by opposition of the parts.

The hooking member 4 also comprises a second end portion 17, where it pivots at the operating lever 3. Therefore, the second axis of rotation 14 passes through the second end portion 17 of the hooking member 4 and, specifically, the second end portion is rotatably connected to a region of the operating lever 3 that is interposed between the first axis of rotation 11 and the second end region 13 of the operating lever 3.

The hooking member 4 is rotatable relative to the operating lever 3 between a first angular position and a second angular position, and vice versa. In the first angular position (shown in Figures 1 to 12), the hooking member 4 and the operating lever 3 form a first angle A1 between them. In particular, the hooking member 4 and the operating lever 3 extend mainly on opposite sides relative to the second axis of rotation 14. Specifically, they are substantially aligned and form an angle A1 between them which is substantially a straight angle.

In the second angular position (shown in Figures 14 to 18), the hooking member 4 and the operating lever 3 are positioned substantially in an L-shape or a T-shape and form a second angle A2 between them which is convex and smaller than the first angle A2. For example, said second angle A2 is between 80° and 120°.

In the embodiment illustrated, the operating lever 3 is substantially forkshaped or Y-shaped, its first end region 12 comprising two prongs 18, 19, each pivoting at a respective wing 9, 10 of the supporting body 2. Between the two prongs 18, 19 there is a cavity 20 which, in the first angular position, houses the second end portion 17 of the hooking member 4.

In the embodiment illustrated, the hooking member 4 comprises a first body 21 including the first end portion 15 and a second body 22 including the second end portion 17. The first body 21 has an elongate shape, in use being a bar, and is slidable longitudinally relative to the second body 22, in which it is partly inserted. Inside the second body 22 there is an elastic compensation element 23, which is loaded when the first body 21 is shifted in the direction of extraction from the second body 22. Consequently, the sliding in the direction of extraction (that is to say, lengthening of the hooking member 4) is limited and opposed by the elastic compensation element 23. In particular, the elastic compensation element 23 is a cylindrical spring made of polyurethane which is fitted on the first body 21 and is contained between respective contact elements of the first body 21 and of the second body 22. In a specific embodiment, at least one part of the first body 21 is a threaded bar and one of said contact elements is a nut 24 screwed onto the threaded part. That allows adjustment of the length of the hooking member 4 and the force required for lengthening it.

The supporting body 2, the operating lever 3 and the hooking member 4 form an articulated mechanism, in which movement of the operating lever 3 by the operator also causes movement of the hooking member 4. Basically, said articulated mechanism is a toggle mechanism.

In use, when the operating lever 3 and the hooking member 4 are in the locking position and in the first angular position, the openable side board 5 is locked relative to the other part 6 of the body 7 thanks to the hooking member 4 which is hooked to the fixed contact element 16 and pulls it towards the supporting body 2.

Moreover, in the locking position, the distance between the second axis of rotation 14 and the flange 8 of the supporting body 2 is less than the distance between the first axis of rotation 11 and the flange 8. In fact, during the movement towards the locking position, the hooking member 4 moves towards the flange 8 until it passes beyond the first axis of rotation 11. Consequently, in that locking position, a force acting on the openable side board 5 in the opening direction pulls the hooking member 4 and produces on the operating lever 3 a moment of force that tends to cause the operating lever 3 to rotate towards the flange 8, not towards the unlocking position. That prevents the locking unit 1 from being able to spontaneously unlock due to stresses acting on the side board 5. In other words, the locking position has a degree of intrinsic safety.

It should be noticed that the elastic compensation element 23 is compressed in the locking position. That is useful for performing dampened hooking, which allows a small degree of relative mobility between the side board 5 and the rest of the body 7, although still applying a locking force between the parts. Moreover, the elastic compressibility of the elastic compensation element 23 is useful for allowing the above-mentioned degree of intrinsic safety. In fact, the elastic compensation element 23 reaches a maximum compression when the hooking member 4 intercepts the first axis of rotation 11, that is to say, at the moment it passes beyond the latter, and is slightly relaxed in the locking position. Thanks to the elastic compensation element 23, that movement is allowed without damage and the hooking member 4 continues to apply a locking force on the fixed contact element 16 in all of the positions close to that of locking end of stroke.

When the operating lever 3 and the hooking member 4 are in the unlocking position and in the second angular position, the hooking member 4 is disengaged from the fixed contact element 16. Therefore, the openable side board 5 is unlocked relative to the other part 6 of the body 7 and can be opened.

To lock the openable side board 5 again, it is returned to the closed position, the end piece 15 of the hooking member 4 is inserted in the fixed contact element 16 and the operating lever 3 is pushed into the locking position.

The locking unit 1 according to this invention also comprises an engaging element 25 designed to engage with the hooking member 4 and/or the operating lever 3 for reversibly retaining the operating lever 3 and the hooking member 4 in the second angular position, opposing a return towards the first angular position.

In use, the engaging element 25 is designed to create a removable constraint between the hooking member 4 and the operating lever 3, such that it holds them in the L-shaped or T-shaped position at least for part of an angular stroke when the user rotates the operating lever 3 about the first axis of rotation 11 to unlock the side board 5 or to lock it again. In other words, thanks to the engaging element 25, the hooking member 4 and the operating lever 3 rotate together about the first axis of rotation 11.

As a result of said constraint, which is created when the second angular position is reached during rotation of the operation lever 3 in the unlocking direction, the user can operate the locking unit 1 with one hand. In fact, the user can remove or insert the end piece 15 of the hooking member 4 from/in the fixed contact element 16 by acting only on the operating lever 3 and with just one hand, without having to also operate the hooking member 4 with the other hand.

Moreover, the constraint created between the operating lever 3 and the hooking member 4 makes the user aware that an end of stroke position has been reached and therefore allows a great reduction in the risk of accidental damage to the locking unit 1 due to an incorrect operating movement performed by the user.

Specifically, the engaging element 25 is mounted on the operating lever 3 and is designed to engage with the hooking member 4 at the second angular position, during shifting of the operating lever 3 towards that angular position.

For this purpose, the engaging element 25 comprises a first tooth 26 which, during the movement towards the second angular position, engages with a suitable groove 27 or seat suitably produced on the hooking member 4. A first elastic return element 28, or first spring, forces the first tooth 26 to remain in the groove 27, creating opposition of parts that maintains said second angular position. Said first spring 28 allows automatic engagement of the engaging element 25 at the second angular position.

In the embodiment illustrated in the figures, the engaging element 25 is rotatably connected to the operating lever 3 on a third axis of rotation 29. Specifically, the engaging element 25 pivots at a region of the operating lever 3 that is interposed between the second end portion 17 of the hooking member 4 and the second end region 13 of the operating lever 3. In other words, the engaging element 25 is positioned between the hooking member 4 and the operating handle. The first axis of rotation 11, the second axis of rotation 14 and the third axis of rotation 29 are parallel with each other.

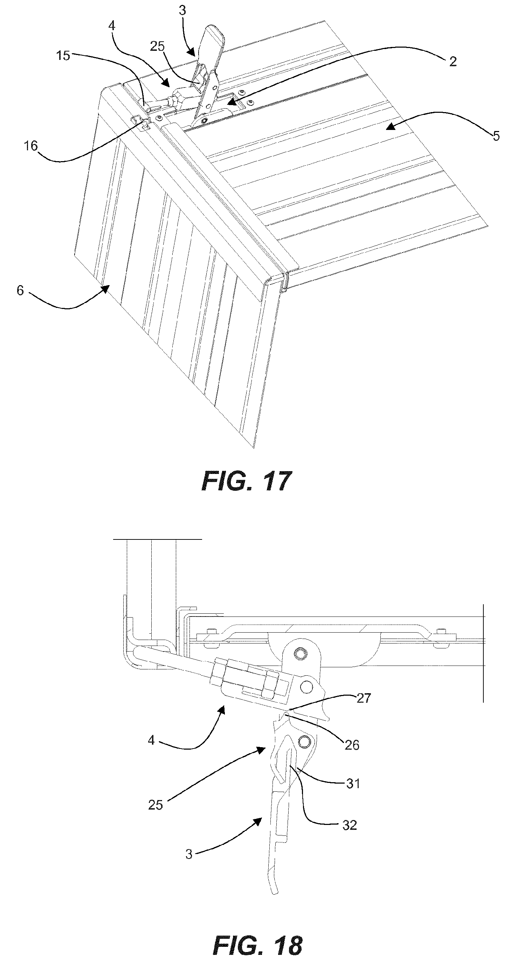

The engaging element 25 is rotatable relative to the operating lever 3 between a retaining position and a releasing position, and vice versa. When the hooking member 4 and the operating lever 3 are in the second angular position, the retaining position corresponds to a condition in which the first tooth 26 engages with the groove 27 and therefore constrains the hooking member 4 and the operating lever 3 to one another (Figure 16). The releasing position corresponds to a condition in which the first tooth 26 is extracted from the groove 27 and therefore allows the return towards the first angular position (Figure 18).

The first spring 28, in particular, is a torsion spring and is positioned around a pin 30 that defines the third axis of rotation 29. The first spring 28 is designed to force the engaging element 25 towards the retaining position. That is to say, the first spring 28 is loaded when the engaging element 25 is in the releasing position. The engaging element 25 has a second tooth 31 which, in the retaining position, is in contact with a stop surface 32 on the operating lever 3. The contact between the second tooth 31 and the stop surface 32 defines the retaining position as an end of stroke position for rotation of the engagement element 25, it being impossible to move beyond that position despite the action of the first spring 28.

The first spring 28 is selected with a force (that is to say, with an elastic constant) such that, when the end piece 15 of the hooking member 4 is unhooked from the fixed contact element 16, the engaging element 25 remains in the retaining position during a rotation of the operating lever 3 about the first axis of rotation 11. In other words, when the hooking member 4 is free relative to the fixed contact element 16, the force of the first spring 28 is sufficient to hold the engaging element 25 in position and therefore guarantee retention in the second angular position when the user moves the operating lever 3.

The engaging element 25 may also function as a safety system, to prevent accidental unlocking of the side board 5 relative to the rest of the body 7. In other words, the engaging element is a safety ratchet. For this purpose, the engaging element 25 is further designed to engage with the hooking member 4 and/or the operating lever 3 for reversibly retaining the operating lever 3 and the hooking member 4 in the first angular position, in particular when the operating lever 3 is in the locking position. In use, the engaging element 25 is designed to oppose, in use, a return towards the second angular position and therefore prevents the operating lever 3 from accidentally being shifted from the locking position.

In the embodiment illustrated, the engaging element 25, which is mounted on the operating lever 3, is designed to engage with the hooking member 4 even substantially at the first angular position, thanks to a contact surface 33 of the engaging element 25 which makes contact with a corresponding counter-contact surface 34 of the hooking member 4. In particular, the contact surface 33 is on one side of the first tooth 26, whilst the counter-contact surface 34 is a face of a projection 35 of the hooking member 4. When the operating lever 3 is in the locking position, the first spring 28 holds the engaging element 25 in the engaging position in which the second tooth 31 is against the stop surface 32.

If the user attempts to rotate the operating lever 3 towards the unlocking position, the operating lever 3 tends to also rotate towards the second angular position relative to the hooking member 4, since the second end 15 of the latter is constrained by the fixed contact element 16.

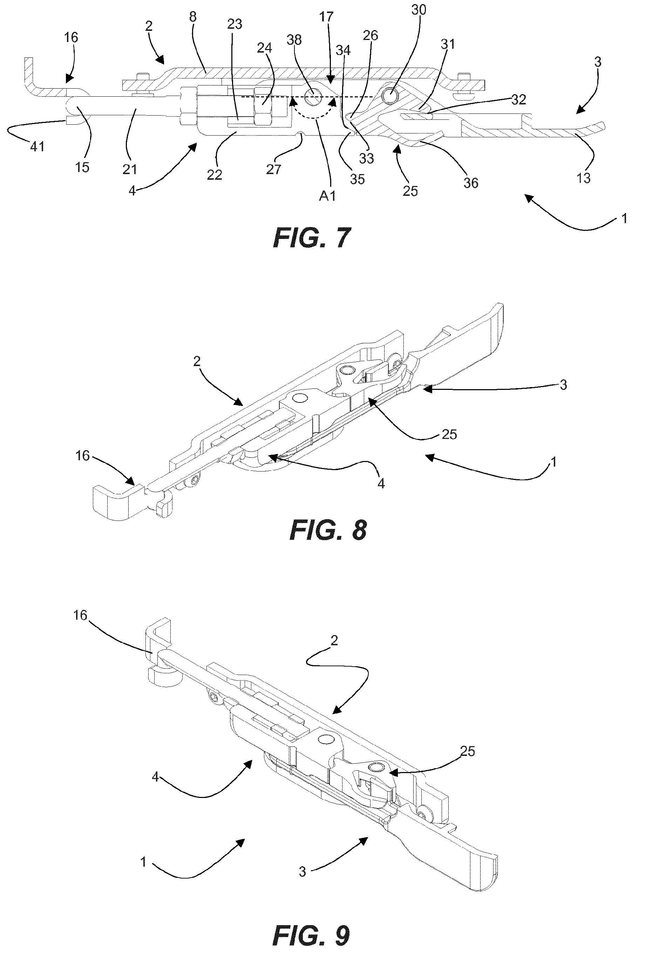

Therefore, the contact surface 33 and the counter-contact surface 34 make contact with each other, generating a moment of force on the engaging element 25 that acts in a clockwise direction in Figure 7. Since the engaging element 25 cannot rotate beyond the engaging position due to the opposition between the second tooth 31 and the stop surface 32, the opposition of parts between the contact surface 33 and the counter-contact surface 34 prevents a further rotation of the operating lever 3, thereby holding it in the locking position.

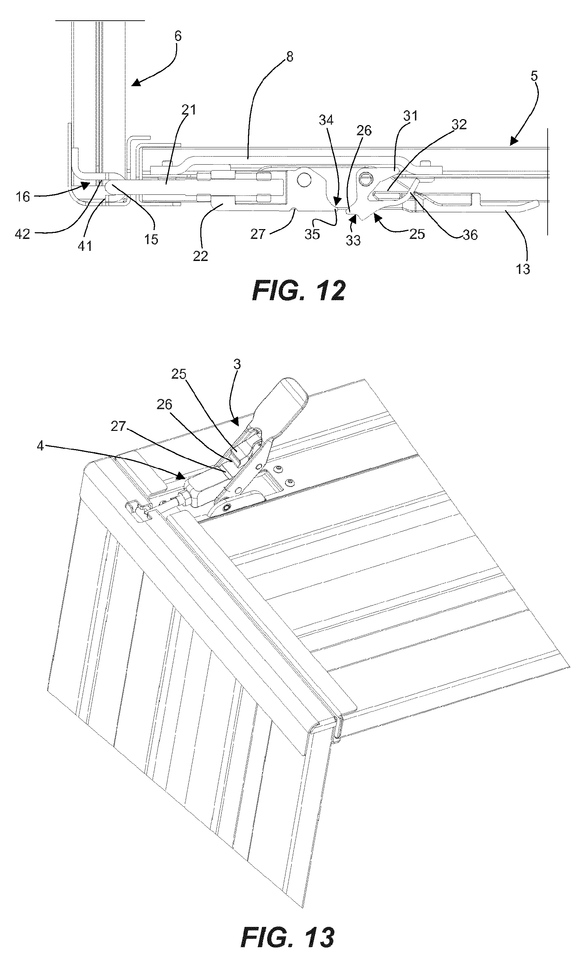

In order to be able to move the operating lever 3 into the unlocking position, first the user must rotate the engaging element 25 towards the releasing position, as shown in Figure 12, with an anti-clockwise rotation in Figure 7. In that releasing position, the first tooth 26 and the contact surface 33 are on the other side of the projection 35 of the hooking member 4 and therefore they do not create interference with the counter-contact surface 34. Therefore, retention of the operating lever 3 and of the hooking member 4 in the first angular position is released: the operating lever 3 can be rotated without obstacles towards the unlocking position.

The engaging element 25 comprises an operating portion 36 which can be pressed by the user to make the engaging element 25 rotate towards the releasing position.

The locking unit 1 also comprises a second elastic return element 37, or second spring, designed to operate in conjunction with the operating lever 3 and the hooking member 4 for forcing them towards the first angular position. In other words, the second spring 37 is loaded when the operating lever 3 and the hooking member 4 are in the second angular position. Said second spring 37, in particular, is a torsion spring and is positioned around a pin 38 that defines the second axis of rotation 14. The second spring 37 has two end parts 39 that engage with the prongs 9, 10 of the operating lever 3 and an intermediate part 40 that engages with the second body 22 of the hooking member 4.

Said second spring 37 is useful during the hooking operation, when the end piece 15 of the hooking member 4 is partly constrained to the fixed contact element 16 and the engaging element 25 has already freed the operating lever 3 and the hooking member 4. In fact, in that condition the second spring 37 pushes the hooking member 4 in a direction such that it is held against the fixed contact element 16, thereby preventing the end piece 15 of the hooking member 4 from being able to accidentally jump out of the fixed contact element 16 before reaching the locking position.

The force of the second spring 37 is selected in such a way that it cannot overcome the first spring 28 which acts on the engaging element 25. In fact, it should be noticed that the first spring 28 and the second spring 37 cause moments of force that act on the engaging element 25 in opposite directions. To prevent the engaging element 25, due to the action of the second spring 37, from accidentally moving into the releasing position when the operating lever 3 and the hooking member 4 are in the second angular position and the engaging element 25 is in the retaining position, the forces of the first spring 28 and of the second spring 37 are selected with values such that the first spring 28 overcomes the second spring 37 and the second angular position is maintained.

The second spring 37 is also useful when the side board 5 is unhooked and open. In fact, after completely unhooking the side board 5, the user can press the operating portion 36 of the engaging element 25 to bring the latter into the releasing position, freeing the operating lever 3 from the hooking member 4. Consequently, the second spring 37 pushes them towards the first angular position and, since the movement of the hooking member 4 is also limited by the supporting body 2 or by the edge of the part of the vehicle body 7 on which it is mounted, the operating lever 3 is automatically pushed towards the first position in which it is substantially parallel with the flange 8 of the supporting body 2. That is useful for minimising projection of the parts of the locking unit 1 relative to the outline of the vehicle body 7 when the side board is unhooked, thereby eliminating or reducing the risks of impact for persons who may pass close to the vehicle body without noticing said projecting parts.

This patent application also relates to an industrial vehicle body 7 equipped with the locking unit 1 and to an industrial vehicle fitted with a body 7 equipped with the locking unit 1.

In both cases the vehicle body 7 comprises at least one openable side board 5 and at least one locking unit 1 for locking the openable side board 5 in a closed position, made according to what is described above.

In turn, the locking unit 1 may be fixed to the openable side board 5 or to another part 6 of the vehicle body 7, whilst at least one fixed contact element 16 is fixed respectively to the other part 6 of the vehicle body 7 or to the openable side board 5.

As regards operation of the locking unit 1 according to this invention, an example description is provided below.

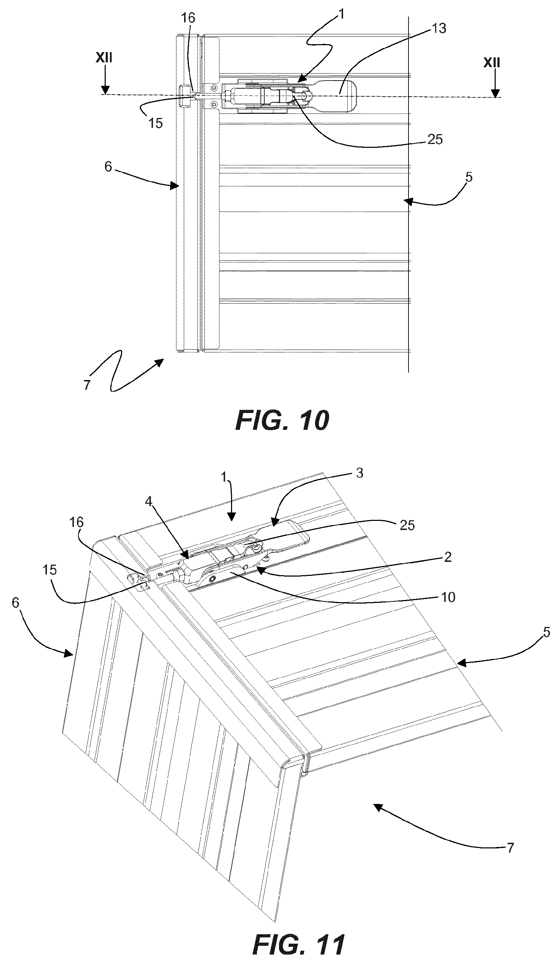

Figures 10 and 11 show an openable side board 5 that is locked in the closed condition. To open the side board 5, the user presses on the operating portion 36 of the engaging element 25, bringing the latter into the releasing position and freeing the operating lever 3 (Figure 12), which can therefore be pulled by the user towards the unlocking position.

Thanks to the structure of the articulated mechanism and to the interaction with the fixed contact element 16 and the other parts of the body 7, during the stroke towards the unlocking position (Figure 13) the operating lever 3 also rotates relative to the hooking member 4, which in turn is shifted in such a way that its end piece 15 moves away from the fixed contact element 16. In this stroke, the engaging element 25 (which in the meantime has been released by the user) slides on the second body 22 of the hooking member 4, against which it is pushed by the first spring 28, until the first tooth 26 finds the groove 27 and is locked snap-in style in it when the second angular position is reached (Figures 14 to 16).

At this point, the operating lever 3 and the hooking member 4 are locked together and, thanks to suitable sizing of the parts, the end piece 15 of the hooking member 4 is beyond an outer edge 41 of the fixed contact element 16 and therefore can be extracted from it with a rotating movement. Rotating the operating lever 3 towards the locking position (that is to say, anticlockwise in Figure 16), the hooking member 4 is completely extracted from the fixed contact element 16 and the side board 5 can be opened (Figure 17). It should be noticed that, apart from the initial releasing, if necessary, of the engaging element 25, this entire unlocking operation has been carried out by acting only on the operating lever 3, with just one hand.

At the end of the unlocking operation, the user presses the engaging element 25 to bring it into the releasing position and, as described above, the second spring 37 brings the operating lever 3 and the hooking member towards the first angular position and towards a condition substantially parallel with the flange 8, preventing the parts of the locking unit 1 from remaining projecting and constituting dangerous obstacles.

The openable side board 5 is locked substantially with an opposite, contrary motion.

The side board 5 is brought into the closed condition and the user rotates the operating lever 3 towards the second angular position (that is to say, clockwise in Figure 16), if necessary initially pressing the operating portion 36 of the engaging element 25 to unlock the operating lever 3 from the first angular position. In the second angular position, the operating lever 3 and the hooking member 4 are locked.

The operating lever 3 is rotated towards the unlocking position until the hooking member 4 (which is held in the second angular position by the engaging element 25) is inserted with its end piece 15 in the fixed contact element 16 or rests on the nearby edge of the respective part of the body 7. At this point, the user presses on the operating portion 36 of the engaging element 25, moving it into the releasing position and freeing the operating lever 3 from the hooking member 4 (Figure 18). The user pushes the operating lever 3 towards the locking position.

During the stroke towards the locking position, the end piece 15 of the hooking member 4 enters the fixed contact element 16 and gradually pulls the side board 5 towards the other part 6 of the body 7. If necessary, the hooking member 4 lengthens slightly, tensioning the elastic compensation element 23. It should be noticed that, thanks to the second spring 37, said end piece 15 is held pushed against an inner edge 42 of the fixed contact element 16. In fact, the second spring 37 pushes the hooking member 4 towards a condition substantially aligned with the operating lever 3. Moreover, during this stroke the engaging element 25 (which in the meantime has been released by the user) slides on the second body 22 of the hooking member 4, against which it is pushed by the first spring 28, until the first tooth 26 moves beyond the projection 35 of the hooking member 4 and snaps into the engaging position (Figures 1 to 9).

When the operating lever 3 reaches the locking position, the operating lever 3 and the hooking member 4 are in the first angular position, the side board 5 is locked and the engaging element 25 prevents accidental unlocking.

Therefore, this invention brings important advantages and in particular allows the user to use a single hand to operate the locking unit 1 during unlocking and locking of an openable side board 5, speeding up and simplifying operations.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

It should be noticed that the above-mentioned return element 37, which is designed to operate in conjunction with the operating lever 3 and the hooking member 4 for forcing them towards the first angular position, could advantageously be present in the locking unit 1 even in the absence of the engaging element 25. Therefore, the Applicant reserves the right to file a divisional patent application whose subject matter is a locking unit 1 comprising said second elastic return element 37 and if necessary without the engaging element 25.

## Claims

1. A locking unit (1) for a board (5) of a body (7) of an industrial vehicle, the board (5) being openable relative to another part (6) of the body (7), the locking unit (1) comprising:
- a supporting body (2) which, in use, is fixable to, or integratable in, the openable board (5) or the other part (6) of the body (7);
- an operating lever (3) rotatably connected to the supporting body (2) on a first axis of rotation (11), the operating lever (3) being rotatable relative to the supporting body (2) between a locking position and an unlocking position, and vice versa, the operating lever (3) comprising a first end region (12), through which the first axis of rotation (11) passes, and a second end region (13) which, in use, can be operated by a user for rotating the operating lever (3) between the locking position and the unlocking position, and vice versa;
- a hooking member (4) rotatably connected to the operating lever (3) on a second axis of rotation (14), the hooking member (4) being rotatable relative to the operating lever (3) between a first angular position and a second angular position, and vice versa, wherein in the first angular position the hooking member (4) and the operating lever (3) form a first angle (A1) between them, and wherein in the second angular position the hooking member (4) and the operating lever (3) are substantially positioned in an L-shape or a T-shape and form a second angle (A2) between them which is convex and smaller than the first angle (A1), the hooking member (4) comprising a first end portion (15) which in use can be hooked to a fixed counterpart (16) which is fixed respectively to the other part (6) of the body (7) or to the openable board (5), the hooking member (4) comprising a second end portion (17) through which the second axis of rotation (14) passes,
wherein the supporting body (2), the operating lever (3) and the hooking member (4) form an articulated mechanism such that, in use, the openable board (5) can be locked relative to the other part (6) of the body (7) when the operating lever (3) and the hooking member (4) are in the locking position and in the first angular position, and the openable board (5) can be unlocked relative to the other part (6) of the body (7) when the operating lever (3) and the hooking member (4) are in the unlocking position and in the second angular position,
**characterised in that** the locking unit (1) further comprises an engaging element (25) designed to engage with the hooking member (4) and/or the operating lever (3) for reversibly retaining the operating lever (3) and the hooking member (4) in the second angular position, the engaging element (25) being designed to oppose, in use, a return towards the first angular position.

2. The locking unit (1) according to claim 1, **characterised in that** the engaging element (25) is mounted on the operating lever (3) and is designed to engage with the hooking member (4) at the second angular position.

3. The locking unit (1) according to claim 2, wherein the engaging element (25) comprises a tooth (26) and the hooking member (4) comprises a groove or a seat (27) which is designed to be engaged by the tooth at the second angular position.

4. The locking unit (1) according to claim 2 or 3, **characterised in that** the engaging element (25) is rotatably connected to the operating lever (3) on a third axis of rotation (29), the engaging element (25) being rotatable relative to the operating lever (3) between a retaining position and a releasing position, and vice versa,
the locking unit (1) further comprising an elastic return element (28) designed to force the engaging element (25) towards the retaining position.

5. The locking unit (1) according to claim 4, **characterised in that** the force of the elastic return element (28) is selected in such a way that, when the first end portion (15) of the hooking member (4) is not hooked to the fixed counterpart (16), the engaging element (25) remains in the retaining position and retains the operating lever (3) and the hooking member (4) in the second angular position during a rotation of the operating lever about the first axis of rotation (11).

6. The locking unit (1) according to claim 4 or 5, wherein the second end portion (17) of the hooking member (4) is rotatably connected to the operating lever (3) in a region interposed between the first axis of rotation (11) and the second end region (13) of the operating lever (3), **characterised in that** the engaging element (25) is rotatably connected to the operating lever (3) in a region interposed between the second end portion (17) of the hooking member (4) and the second end region (13) of the operating lever (3), and **characterised in that** the first axis of rotation (11), the second axis of rotation (14) and the third axis of rotation (29) are parallel with each other.

7. The locking unit (1) according to any one of claims 1 to 6, **characterised in that** the engaging element (25) is further designed to engage with the hooking member (4) and/or with the operating lever (3) for reversibly retaining the operating lever (3) and the hooking member (4) in the first angular position, the engaging element (25) being designed to oppose, in use, a return towards the second angular position.

8. The locking unit (1) according to claim 7, **characterised in that** the engaging element (25) is mounted on the operating lever (3) and is designed to engage with the hooking member (4) substantially at the first angular position, the engaging element (25) comprising a contact surface (33) which is intended to make contact with a corresponding contact counter-surface (34) of the hooking member (3).

9. The locking unit (1) according to claim 7 or 8 and according to at least claim 4, **characterised in that** a rotation of the engaging element (25) towards the releasing position releases the retention of the operating lever (3) and of the hooking member (4) in the first angular position.

10. The locking unit (1) according to any one of claims 1 to 9, **characterised in that** it comprises a return spring (37) which is designed to operate in conjunction with the operating lever (3) and the hooking member (4) for forcing them towards the first angular position.

11. The locking unit (1) according to claim 10 and according to at least claim 4, wherein the forces of the return spring (37) and of the elastic return element (28) are selected in such a way that, when the operating lever (3) and the hooking member (4) are in the second angular position and the engaging element (25) is in the retaining position, the elastic return element (28) overcomes the return spring (37) and the second angular position is maintained.

12. A body (7) of an industrial vehicle comprising:
- at least one board (5) which is openable relative to another part (6) of the body (7);
- at least one locking unit (1) for locking the openable board (5) in a closed position, the locking unit (1) being made according to any one of claims 1 to 11 and being fixed to the openable board (5) or to the other part (6) of the body (7); and
- at least one fixed counterpart (16) which is fixed respectively to the other part (6) of the body (7) or to the openable board (5).
